# EUROPEAN PATENT APPLICATION

(11) **EP 1 300 621 A1**
(43) Date of publication of application: **09.04.2003**
(21) Application number: 01123880.5
(22) Date of filing: 05.10.2001
(51) Int. Cl.: F16L 33/01

(54) **Joint for the connection of fibre-reinforced composite pipes and process for the realisation thereof**

(71) Applicant: Iniziative Industriali S.p.A., 56040 S. Luce (Pisa) (IT)
(72) Inventor: Massaria, Paolo, 20047 Brugherio (Milano) (IT)
(74) Representative: Rapisardi, Mariacristina

(57) **Abstract**

The joint for the connection of fibre-reinforced composite pipes (4,5) comprises a male part (2) and a female part (3) provided on two end parts of pipe to be connected, the male part and the female part have an axial modulus of elasticity which substantially increases proportionally from their free ends to their connection with the pipes.

## Description

The provided finding refers to a joint for the connection of fibre-reinforced composite pipes and to a process for the realisation thereof.

As is known, the connection between pipes takes place through joints capable of resisting the axial traction force generated by the water pressure inside the pipe.

In the case in which the pipes are of the composite type reinforced with fibre, the joint must also be realised in the same way.

The current joints of this type exhibit various drawbacks amongst which is the fact that it has a low resistance to high water pressures and to axial stresses.

Moreover, the current joints are substantially difficult to connect, having generally long assembly times.

The task asked of the provided finding is to eliminate the drawbacks highlighted above, and others as well, of the joints realised in resin reinforced with fibres of the prior art.

In this task an important purpose of the finding is to realise a joint for the connection of fibre-reinforced composite pipes which, as well as having reduced assembly times, is capable of withstanding high water pressures and high axial forces despite the fact that it has a limited encumbrance.

This task, as well as other purposes, are achieved by a joint for the connection of fibre-reinforced composite pipes comprising a male part and a female part provided on two end parts of two pipes to be connected, characterised in that said male part and said female part have an axial modulus of elasticity which substantially increases proportionally from their free ends to their connection with said pipes.

Also object of the provided invention is a process for the realisation of a joint for the connection of fibre-reinforced composite pipes exhibiting a male part and a female part, characterised in that it consists of winding the foils made up of continuous filaments impregnated with resin according to a predetermined winding angle with respect to the axis of said pipes, of varying the angle of said foils with respect to the axis of said joint to vary the axial modulus of elasticity of each foil or layer of foils and of displacing the inversion points of the angle of said foils from the end of said male and female part of said joint towards its inside, which is made up of inner surfaces respectively equipped with a thread and a counterthread, to vary the axial modulus of elasticity of the joint from a maximum value inside said male and female parts to a minimum value at the end of said male and female parts.

Further characteristics and advantages of the finding will become clearer from the description of a preferred but not exclusive embodiment of a joint for the connection of fibre-reinforced composite pipes and a process for the realisation thereof according to the invention, illustrated to indicate and not for limiting purposes in the attached drawings wherein:
- figures 1 and 2 are a transversally sectioned perspective side view of the male and female part, respectively, of the joint according to the finding;
- figure 3 is a transversally sectioned view showing only the upper part of the female part and the male part of the joint according to the finding;
- figure 4 is an enlarged view of the section of the threads when the male part is coupled with the female part.

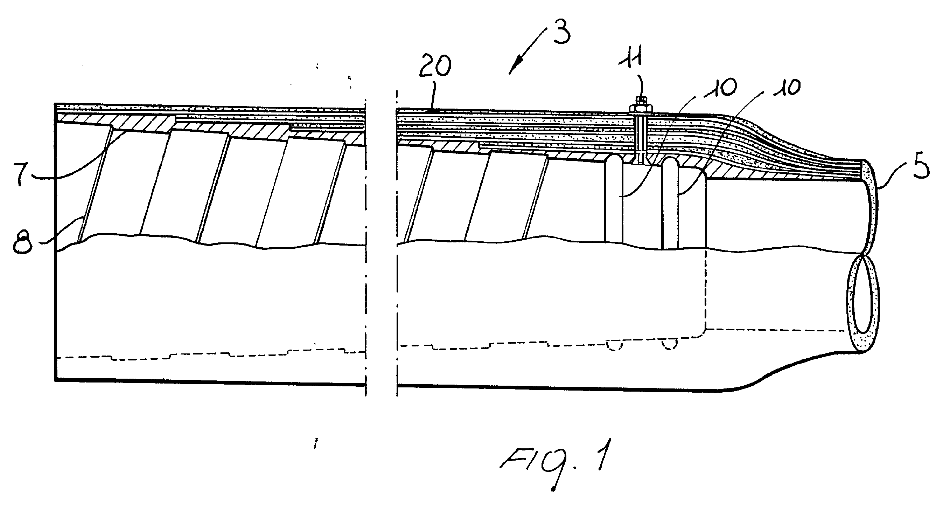

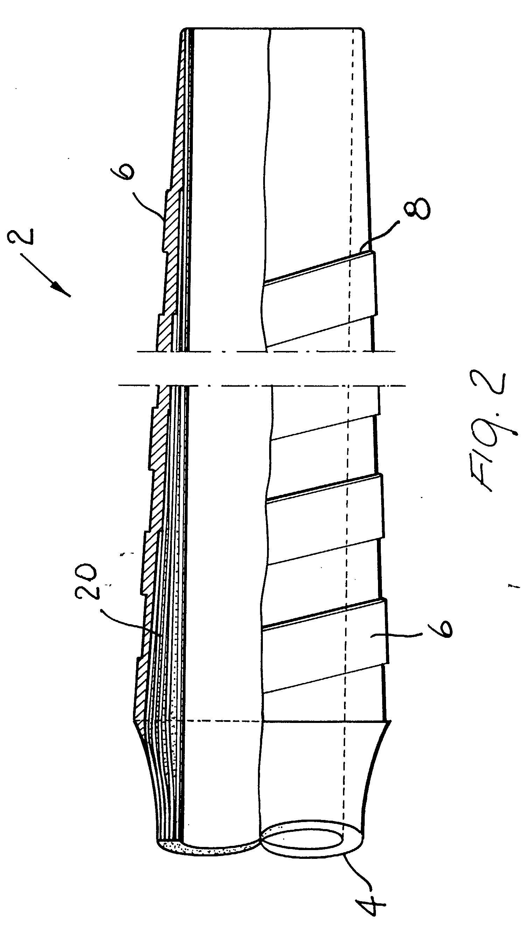

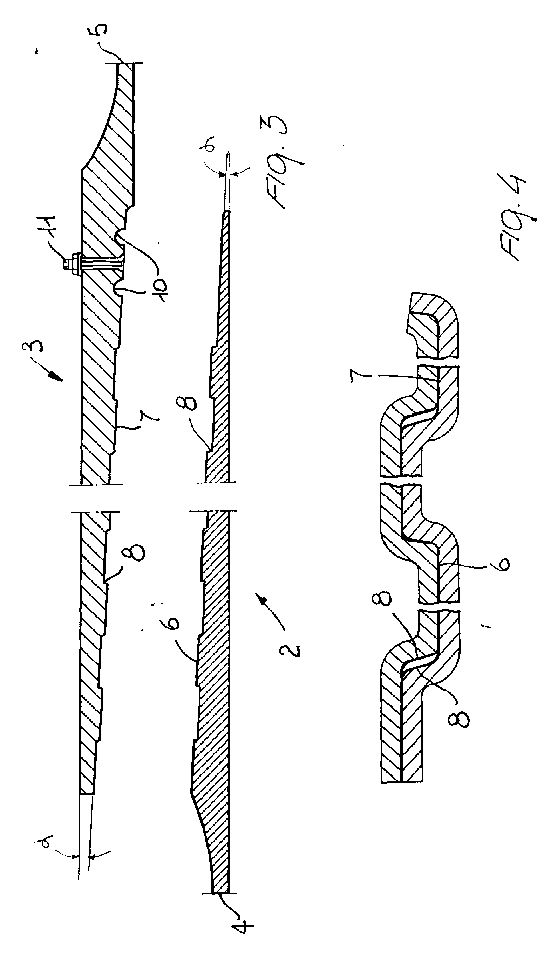

With reference to the quoted figures, the joint for the connection of fibre-reinforced composite pipes comprises a male part and a female part, respectively, indicated as a whole with the reference numbers 2 and 3 and are provided on two end parts of two pipes 4 and 5, to be connected together.

The pipes 4 and 5 are realised with continuous filaments of fibre, impregnated with thermosetting resin, according to the technique of "filament winding" which is carried out through the winding of the continuous filaments of fibre according to a predetermined winding angle with respect to the axis of the pipe.

The resins are of the thermosetting type and can be of the polyether, vinyl ether or epoxy type.

The reinforced fibres can be made of glass, carbon, kevlar and generally material used for composite products, in the form of continuous filaments, cut filaments and woven filaments.

Advantageously, in the joint the male part and the female part have an axial modulus of elasticity which increases substantially proportionally from their free ends to their connection with the pipes 4 and 5.

The male and female parts 2 and 3 have their inner surfaces inclined with respect to the axis of the pipes 4 and 5.

The angle of conicity alpha varies in function of the diameters and the nominal pressures from 1 to 10 degrees.

The inner surfaces of the male and female part 2 and 3, respectively, comprise a thread 6 and a counterthread 7 both helix-shaped.

The thread and the counterthread 6 and 7 are of a constant height and have side walls 8 which are inclined with respect to the axis of the pipes 4 and 5.

In particular, the height of the thread 6 and the counterthread 7 falls within 5% and 25% of the width of their base which is no less than 20 mm to increase the shear strength.

All of the edges of the thread and of the counterthread are rounded with a small radius of curvature.

The pitch of the thread and of the counterthread is equal to or greater than the sum of their bases and the number of helix pitches is variable as a function of the diameter of the pipe which the joint is part of and depends upon the axial force which needs to be realised and thus upon the design pressure.

The male and female parts are realised with cut fibres impregnated with resin and applied onto the female part and onto the male part below and above, respectively, the continuous filaments impregnated with resin, wound according to a predetermined helix, which constitutes the pipes 4 and 5.

Each turn of the thread and counterthread 6 and 7 works practically in the same manner when the pipes 4 and 5 are subject to an axial traction and/or compression force.

This is possible thanks to the fact that the axial modulus of elasticity of the male part and of the female part of the joint is variable from a value equal to the axial modulus of elasticity of the pipes 4 and 5 up to a very low value which is provided on the end of the male and female part, so as to determine a lengthening of these parts which allows the turns of the thread and counterthread to work in practically the same manner.

It should also be said that the length of the male part and female part falls substantially between one or two times the value of the diameter of the pipes and that the circumferential stiffness of the female part is substantially greater than that of the male part so as to guarantee, when a pressure is generated inside the joint, a friction which increases proportionally with the inner pressure, between the parts in contact with the female part and the male part.

The female part, moreover, exhibits, on the opposite side to its end, at least two circumferential notches 10 suitable for housing two O rings which are not represented.

Between the circumferential notches there is, moreover, an axial nipple which passes through the wall of the female part to put the annular space between the O rings under pressure during the testing of the joint.

Suitably, the axial stiffness of the individual male and female parts is variable and decreases towards the end part of the male and female part.

Such a characteristic, as seen, is very useful for distributing the stress and having optimum mechanical performances of axial resistance of the joint.

With the joint structure described above, the axial traction force, generated by the water pressure inside the pipe, transforms into a shear stress on the base of the thread and counterthread 6 and 7 and thus into a compression force on the oblique contact wall 8 between the thread and counterthread of the male and female part.

The substantial width of the thread and counterthread allows to achieve the maximum, allowed by the material, value of shear strength of the material itself which otherwise would be reduced by the small size of the fibre, for which reason the width of the base of the thread and counterthread must not be less, as stated, than 20 mm.

The process for realising the joint described above for connecting fibre-reinforced composite pipes consists of winding the foils made up of continuous filaments of fibres 20 impregnated with resin according to a predetermined winding angle with respect to the axis of the pipes 4 and 5.

Advantageously, by varying the angle of the foils with respect to the axis of the joint, it is possible to vary the axial modulus of elasticity of each foil or of a layer of foils.

Moreover, by displacing the points of inversion of the angle of the foils 20 from the end of the male and female part of the joint towards the inside of the joint, it is possible to vary the axial modules of elasticity thereof from a maximum value inside the male and female parts, to a minimum value at the end of the male and female parts.

This particular solution allows a maximum axial stiffness to be obtained inside the joint, while it allows a minimum axial stiffness at the end of the male and female part.

The different stiffness of the end parts of the joint, and consequently the progressive reduction in stiffness from the inside towards the end of the male and female part of the joint, allows a progressive elongation of the male and female part of the joint from the inside towards the end which allows all of the turns of the thread 6 and counterthread 7 to be made to work in a substantially uniform manner.

It should also be specified that the female part is suitably realised through a moulding operation in such a way as to have the inner surface completely smooth, while the male part is obtained through a turning-milling operation, so as to have its surface, when turned towards the female part, exhibiting a suitable roughness.

This roughness serves to increase the resistance to the axial traction force proportionally to the pressure which generates inside the pipes.

Last but not least, is should be specified that the inner conicity of the male and female part, the width of their thread and counterthread and its low thickness, allow the joint to be assembled with a rotation of little more than one turn, at most two turns, so as to substantially reduce assembly time.

The invention thus conceived is susceptible to numerous modifications and variants, all covered by the provided inventive concept.

Moreover, all of the details can be replaced with technically equivalent elements.

The materials used, the shapes and the sizes can be whatever according to requirements.

## Claims

1. Joint for the connection of fibre-reinforced composite pipes comprising a male part and a female part provided on two end parts of pipe to be connected, **characterised in that** said male part and said female part have an axial modulus of elasticity which substantially increases proportionally from their free ends to their connection with said pipes.

2. Joint for the connection of fibre-reinforced composite pipes according to claim 1, **characterised in that** said male and female parts have their inner surfaces inclined with respect to the axis of said pipes.

3. Joint for the connection of fibre-reinforced composite pipes according to one or more of the previous claims, **characterised in that** said inner surfaces of said male and female part comprise a helix-shaped thread and counterthread, respectively.

4. Joint for the connection of fibre-reinforced composite pipes according to one or more of the previous claims, **characterised in that** said thread and counterthread are of a constant height and has side walls which are inclined with respect to said axis of said pipes.

5. Joint for the connection of fibre-reinforced composite pipes according to one or more of the previous claims, **characterised in that** the height of said thread and counterthread is substantially between 5% and 25% of the width of their base.

6. Joint for the connection of fibre-reinforced composite pipes according to one or more of the previous claims, **characterised in that** said male part and said female part are realised with cut fibres impregnated with resin and applied on said female part and on said male part below and above, respectively, the continuous filaments of fibre impregnated with resin, wound according to a predetermined helix, which constitute said pipes.

7. Joint for the connection of fibre-reinforced composite pipes according to one or more of the previous claims, **characterised in that** each turn of said threads and counterthreads work in practically the same way when said pipes are subject to an axial traction and/or compression force.

8. Joint for the connection of fibre-reinforced composite pipes according to one or more of the previous claims, **characterised in that** the length of said male part and said female part is between one and two times the value of the diameter of said pipes.

9. Joint for the connection of fibre-reinforced composite pipes according to one or more of the previous claims, **characterised in that** the circumferential stiffness of said female part is substantially greater than that of said male part.

10. Joint for the connection of fibre-reinforced composite pipes according to one or more of the previous claims, **characterised in that** said female part comprises on the opposite side to its end at least two circumferential notches suitable for housing two O rings.

11. Joint for the connection of fibre-reinforced composite pipes according to one or more of the previous claims, **characterised in that** between said circumferential notches there is a radial nipple which passes through the wall of said female part for putting the annular space between said O rings under pressure.

12. Process for the realisation of a joint for the connection of fibre-reinforced composite pipes exhibiting a male part and a female part, **characterised in that** it consists of winding the foils made up of continuous filaments of fibre impregnated with resin according to a predetermined winding angle with respect to the axis of said pipes, of varying the angle of said foils with respect to the axis of said joint to vary the axial modulus of elasticity of each foil or layer of foils and of displacing the points of inversion of the angle of said foils from the end of said male and female part of said joint towards the inside thereof, which is made up of conical surfaces respectively equipped with a thread and counterthread, to vary the axial modulus of elasticity of the joint from a maximum value inside said male and female parts to a minimum value at the end of said male and female part.

13. Process for the realisation of a joint for the connection of fibre-reinforced composite pipes according to the previous claim, **characterised in that** said male part and said female part are realised with cut fibres impregnated with resin and applied to said female part and to said male part, below and above, respectively, said continuous filaments of fibre impregnated with resin which constitute said pipes.

14. Process for the realisation of a joint for the connection of fibre-reinforced composite pipes according to one or more of the previous claims, **characterised in that** said male part and said female part have an axial modulus of elasticity which increases -substantially proportionally from their end of smaller thickness to their connection with said pipes of greater thickness.

15. Process for the realisation of a joint for the connection of fibre-reinforced composite pipes according to one or more of the previous claims, **characterised in that** each thread of said thread and counterthread work in practically the same way when said pipes are subject to an axial traction and/or compression force.

16. Process for the realisation of a joint for the connection of fibre-reinforced composite pipes according to one or more of the previous claims, **characterised in that** said female part is realised through a moulding operation and said male part through a turning-milling operation.
